# EUROPÄISCHE PATENTSCHRIFT

(11) **EP 0 513 409 B1**
(45) Veröffentlichungstag und Bekanntmachung des Hinweises auf die Patenterteilung: **24.07.1996**
(21) Anmeldenummer: 91107767.5
(22) Anmeldetag: 14.05.1991
(51) Int. Cl.: C09D 5/14, A01N 43/70

(54) **Verwendung eines mikrobioziden Mittels bei der Herstellung von Betondachsteinen**
Use of a microbicide agent for making concrete shingles
Utilisation d'un agent microbicide pour la fabrication des tuiles en béton

(43) Veröffentlichungstag der Anmeldung: 19.11.1992
(73) Patentinhaber: RIEDEL-DE HAEN AKTIENGESELLSCHAFT, D-30926 Seelze (DE)
(72) Erfinder: Gattner, Hans, Dr., W-3052 Bad Nenndorf (DE); Lindner, Wolfgang, Dr., W-3016 Seelze 1 (DE); Taschenbrecker, Erich, W-3050 Wunstorf 2 (DE); Wagner, Karl, Dr., W-3016 Seelze 1 (DE); Wöhner, Gerhard, Dr., W-3050 Wunstorf (DE)
(74) Vertreter: Geissler, Bernhard, Dr. jur., Dipl.-Phys.

(56) Entgegenhaltungen:
- EP-A- 0 380 984
- DE-A- 3 539 118

## Beschreibung

Betondachsteine werden relativ rasch mit Algen und Pilzen bewachsen. Besonders Flächen, die nicht der direkten Sonneneinstrahlung ausgesetzt sind und infolgedessen lange Zeiträume im feuchten Zustand sind, werden durch Mikroorganismen bereits nach wenigen Monaten unansehlich grün bis schwarz verfärbt. Algen und Pilze bereiten zudem das Wachstum von Flechten und Moosen vor, die mit ihren Wurzeln zu einer Beschädigung der Oberfläche beitragen können, und damit die Gebrauchsdauer eines Betondachsteines verkürzen.

Aus der DE-OS 37 40 779 ist bereits bekannt, das Wachstum von Algen und Pilzen auf Flachdachflächen durch Zusatz von Zinkpulver zu einer Beschichtung zu verhindern. Dieses Verfahren ist aber besonders aus ökologischen Gründen nachteilig, da beispielsweise über ablaufendes Regenwasser Schwermetallionen in die Umwelt eingebracht werden können.

Es ist weiterhin Stand der Technik, Kunststoffdispersionen für Dachbeschichtungen mit Dithiocarbamaten, bevorzugt Zinkdimethyldithiocarbamat, gegen Algenbewuchs auszurüsten. Allerdings reicht die Wirksamkeit von Zinkdimethyldithiocarbamat nicht aus, das Wachstum von Algen auf Dachsteinen langfristig zu verhindern. Außerdem sprechen die relativ hohe Wasserlöslichkeit und die mangelnde Stabilität von Dithiocarbamaten gegen einen Langzeitschutz von stark bewitterten Oberflächen. Bei der Herstellung von beschichteten Dachsteinen werden die eingebrachten Mikrobiozide zudem hohen pH-Werten und erhöhten Temperaturen ausgesetzt, so daß Dithiocarbamate hydrolisieren.

Es ist bislang kein umweltverträgliches Mikrobiozid bekannt, das den Bewuchs von Dachsteinen mit Algen, Flechten und Moosen langfristig verhindern kann.

Methylthio-cyclopropylamino-tertiärbutylamino-1,3,5-triazin (Mctt) ist als Algizid bekannt und wird zum Schutz von Algenbefall in Fassadenfarben eingearbeitet verwendet. Außerdem wird es als Antifoulingzusatz in Schiffsanstrichen eingesetzt.

Mikrobiozide Mittel, die zum Schutz von Fassaden, d.h. senkrechter Flächen, geeignet sind, sind nach dem bisherigen Stand der Technik nicht für Dachsteine geeignet, da hier die Anforderungen an die pH-, Licht-, Temperatur- und Auswaschbeständigkeit wesentlich höher und zum Teil auch anderer technischer Natur sind.

So treten beim Herstellprozess der Dachsteine extrem hohe pH-Werte (>13) verbunden mit hohen Temperaturen beim Aushärten auf, bei denen die üblicherweise in Fassadenbeschichtungen eingesetzten Mikrobiozide hydrolysieren. Im Gegensatz zu Fassadenbeschichtungen treten bei Dachsteinbeschichtungen infolge der geneigten Anbringung entscheidend höhere Auswaschbelastungen durch ablaufende Niederschläge auf. Ebenso müssen an die Licht-, besonders UV-Beständigkeit sehr viel höhere Ansprüche gestellt werden, da die Sonneneinstrahlung infolge der nichtsenkrechten Anbringung sehr viel intensiver ist.

Es ist daher um so überraschender, daß die Aufgabe vorliegender Erfindung, nämlich ein Mittel bereitzustellen, das Betondachsteine wirksam und langfristig gegen den Befall mit Algen, Pilzen, Flechten und Moosen schützt, gelöst wird durch die Verwendung von Methylthio-cyclopropylamino-tertiärbutylamino-1,3,5-triazin (Mctt) als mikrobiozides Mittel bei der Herstellung von Betondachsteinen.

Die Erfindung ist besonders insofern überraschend, als die erforderliche Langzeitwirkung aus den physikalischen Daten von Mctt nicht vorhergesagt werden kann. Beispielsweise ist die ursprünglich für den Pflanzenschutz entwickelte Verbindung als in der Umwelt abbaubar beschrieben. Weiterhin war es nicht zu erwarten, daß Mott die auf den Betonoberflächen auftretenden hohen pH-Werte und die Bestrahlung mit Sonnenlicht übersteht und somit über Jahre seine Aktivität nicht einbüßt. Z.B. hydrolisiert das strukturanaloge Prometryn (2,4-bis (Isopropylamino)-6-methylthio-1,3,5-triazin) im sauren und im alkalischen Milieu durch Austausch der Methylthio- gegen die Hydroxylgruppe.

Mctt kann allein, oder bevorzugt, im Gemisch mit einem oder mehreren Fungiziden verwendet werden. Gemische mit Fungiziden weisen ein bevorzugtes Gewichtsverhältnis von Mctt: Fungizid 1 : 0,1 bis 1 : 20 auf. Besonders bevorzugt ist ein Gewichtsverhältnis von Mctt: Fungizid 1 : 0,5 bis 1 : 5.

Bevorzugte Fungizide sind alkali- und auswaschbeständige Fungizide. Besonders bevorzugt sind beispielsweise Benzimidazolderivate, wie beispielsweise Thiabenzazol oder Benzimidazolylmethylcarbamat, Triazolderivate, wie beispielsweise Propiconazole oder Tebuconazole, sowie Morpholinderivate wie beispielsweise Fenpropimorph. Ganz besonders bevorzugt ist Benzimidazolylmethylcarbamat (BCM).

Mctt sowie die genannten Fungizide sind bekannt. Sie können käuflich erworben oder nach dem Fachmann bekannten Methoden hergestellt werden.

Das erfindungsgemäß verwendete Mctt, beziehungsweise seine Mischungen mit Fungiziden, wird bevorzugt als Pulver, Lösung oder wässrige Paste formuliert. Solche Formulierungen weisen einen Wirkstoffgehalt von 1 bis 99 Gew%, vorzugsweise 10 bis 80 Gew%, auf, wobei der jeweilige Restbestandteil aus üblichen Formulierungshilfsmitteln besteht, wie z.B. Dispergiermitteln, Lösemitteln, Antibackmittel, Verdickungsmittel, Füllstoffen oder Trägerstoffen. Lösungen enthalten als Lösemittel beispielsweise Glykole oder deren Ether oder Ester, wie z.B. Ethylenglykol, Diethylenglykol oder Polyethylenglykol oder deren Mono- oder Dialkylether, Propylenglykol, Dipropylenglykol oder Polypropylenglykol oder deren Mono- oder Dialkylether oder die entsprechenden Niederalkylester, wobei Alkyl jeweils Methyl, Ethyl, n-Propyl, iso-Propyl oder Butyl bedeutet.

Bevorzugt sind Monoalkylether von Mono-, Di- oder Triethylenglykol bzw. Mono-, Di- oder Tripropylenglykol, sowie Ester der Monoalkylglykole und Polyglykole.

Besonders bevorzugt sind Butylglykol, Methyldiglykol, Butyldiglykol, Butylglykolacetat, Butyldiglykolacetat, Polyethylenglykol (Molmasse 300 bis 600).

Selbstverständlich könnnen die genannten Glykole auch in Gemischen untereinander eingesetzt werden.

Die genannte Formulierungen werden nach den üblichen, dem Fachmann bekannten Methoden hergestellt. Mischungen aus Mctt und Fungiziden werden bevorzugt dadurch hergestellt, daß man dem rohen, grobkristallinen Mctt das ungemahlene Fungizid als Mahlhilfsmittel zumischt und beide Bestandteile gemeinsam in einer Schlagkreuzmühle, z.B. einer handelsüblichen Schrägleistenturbomühle, auf Korngrößen von unter 40 µm vermahlt. Die so erhaltene pulverförmige Mischung kann nach üblichen Verfahren in Lösungen oder wässrige, pastenförmige Formulierungen überführt werden.

Die genannten Formulierungen können direkt zur Behandlung von Betondachsteinen eingesetzt werden. Bevorzugt werden sie aber filmbildenden Kunststoffdispersionen oder filmbildende Kunststoffdispersionen enthaltenden Beschichtungsmitteln zugesetzt, wobei diese derart ausgerüsteten Beschichtungsmittel auf die Betonoberflächen aufgebracht werden. Die Beschichtungsmittel können neben den filmbildenden Kunststoffdispersionen weitere Zuschlagstoffe enthalten, die dem Fachmann an sich bekannt sind, wie z.B. Farbpigmente (z.B. Eisenoxide usw.), Lösemittel, Weichmacher, UV-Absorber, Thixotropiermittel (z.B. Cellulosederivate), Füllstoffe, Haftvermittler usw.

Als filmbildende Kunststoffdispersionen können beispielsweise die bekannten käuflichen Produkte eingesetzt werden.

Bevorzugt sind Kunststoffdispersionen auf Polyacrylat-Basis und auf Styrolacrylat-Basis.

Die Kunststoffdispersionen enthalten die Wirkstoffe in Mengen von 0.01 bis 5 % Mctt und 0.05 bis 10 % eines Fungizides, bevorzugt 0.05 bis 1 % Mctt und 0.1 bis 2 % des Fungizides.

Die Formulierungen, die filmbildenden Kunststoffdispersionen bzw. die filmbildenden Kunststoffdispersionen enthaltenden Beschichtungsmittel werden in solchen Mengen verwendet, daß auf einen m² Betonoberfläche 0,01 bis 5g, bevorzugt 0,05 bis 2 g, Mctt und 0,1 bis 2 g Fungizid kommen.

Die erfindungsgemäße Verwendung erlaubt es, Betondachsteine bereits nach einmaliger Ausrüstung langfristig vor Bewuchs mit Algen, Pilzen, Flechten und Moosen zu schützen. Zudem ist es möglich, bereits bewachsene Betonflächen zu sanieren und langfristig gegen einen erneuten Bewuchs zu schützen.

So blieb ein von Algen, Pilzen und Flechten befreites Dach nach Aufbringen eines Kunststoffilmes mit dem anspruchsgemäßen Mittel auch nach über 2,5 Jahren völlig frei von erneutem Bewuchs, während die nicht ausgerüstete Vergleichsfläche nach dieser Zeit wieder vollständig bewachsen war.

### Beispiel 1

### Herstellung einer Mctt-BCM-Formulierung

500 kg BCM und 500 kg technisches Mctt werden in einem Zwangsmischer vorgemischt und in einer Schrägleistenturbomühle auf eine Korngröße unter 40 µm vermahlen. In einem Dissolver werden die 40 kg Carboxymethylcellulose in 2000 l Wasser gerührt, bis die Cellulose vollständig aufgequollen ist. Dann werden 1000 kg der gemahlenen BCM-Mctt-Mischung und 1000 kg Kaolin eingerührt bis eine homogene Paste vorliegt.

Diese Formulierung kann nach üblicher Methode in wässrige Betonbeschichtungssysteme eingearbeitet werden, ohne daß es zu einer Aufrauung der oberfläche der daraus hergestellten Beschichtung kommt.

### Beispiel 2

### Laborprüfung der Wirksamkeit von Mtcc-Fungizid-Mischungen auf alkalischen Betonuntergründen

Die zu prüfenden Wirkstofformulierungen werden in abgestuften Konzentrationen in eine handelsübliche Dispersionsfarbe eingemischt.

Die biologische Prüfung erfolgt auf Rundfilterpapier (Nr. 597 von Schleicher & Schüll, Durchmesser 5,5 cm). Dazu werden die Filter mit der zu prüfenden modifizierten Dispersionsfarbe einseitig bestrichen.

Parallel dazu stellt man durch Mischung von 71,6 % Estrichsand (ca. 1.6 % Feuchtigkeit), 18,9 % Portlandzement nach DIN 1164 und 9,5 % Leitungswasser einen frischen Beton her, der in eine Petrischale gefüllt und die Oberfläche mit dem Spatel geglättet wird. Durch mehrmaliges vorsichtiges Aufklopfen der Petrischale wird der Beton verdichtet.

Die frisch angestrichenen Papierfilter werden unverzüglich auf den frisch hergestellten feuchten Beton aufgelegt und mit Hilfe eines Spatel angedrückt. Die Petrischale wird mit Hilfe eines Klebebandes (z.B. Tesaband) abgedichtet, um ein Austrocknen zu verhindern.

Die Prüfkörper werden nun 48 Stunden in einem Wärmeschrank bei 60^{o}C gelagert. Anschließend läßt man auf Raumtemperatur abkühlen und hebt dann die feuchten Filter vorsichtig mit einem Spatel von der Betonoberfläche ab. Die Filter werden 16 Stunden auf Filterpapier an der Luft getrocknet.

Anschließend werden die Prüfkörper 48 Stunden (Serie b) in der Tabelle) oder 96 Stunden (Serie c) in der Tabelle) mit Leitungswasser gewässert, wobei pro m² 63 l Wasser eingesetzt werden um eine Auswaschbelastung durch Beregnung zu simulieren. Das Auslaugwasser wird jeweils nach 24 Stunden gewechselt.

Die Prüfung der Bewuchsfestigkeit gegen Algen wird auf festen Nährböden, die wie folgt bereitet werden durchgeführt. 10 g Agar, pulverförmig, 1.00 g Calciumnitrat-4-hydrat, 0.25 g Kaliumhydrogenphosphat, 0.25 g Magnesiumsulfat-7-hydrat, 0.25 g Kaliumchlorid, 1 mg Eisen (III)-chlorid-6-hydrat werden in 1 l destilliertes Wasser eingerührt und die Lösung 15 Minuten bei 121^{o}C im Autoklaven sterilisiert.

Anschließend wird der noch flüssige, heiße Nährboden mit Hilfe eines sterilen Meßzylinders zu je 18 ml in sterile Kunststoffpetrischalen ausgegossen. Nach Erstarren sind die Nährböden für den Test bereit.

Zur biologischen Prüfung werden neben den vorbelasteten unbelastete Prüfungsbeschichtungen eingesetzt, die man aus denselben modifizierten Dispersionsfarben auf Papierfilter hergestellt und getrocknet hat. (Serie a) in der Tabelle).

Als Wuchskontrolle wird die nicht ausgerüstete Dispersionsfarbe mitgeprüft (Probe 5).

Vor der Algeninfektion werden die getrockneten Prüfkörper von jeder Seite jeweils 1 Stunde unter UV-Licht sterilisiert und einzeln mit der beschichteten Seite nach oben auf die Algennähragrarplatten unter sterilen Bedingungen gelegt.

Danach erfolgt die Infektion mit jeweils 4,5 ml Grünalgenkultur mit einer Zellkonzentration von 10⁵ bis 10⁶ pro ml.

Der Versuch wird in einem Raum mit diffusem Licht bei 16 - 20°c durchgeführt. Um ein schnelleres Wachstum der Grünalgen zu fördern, wird nachts mit Glühbirnen belichtet.

Nach 14 Tagen werden die Anstriche nach folgendem Schema beurteilt:
- 0: Anstrich nicht bewachsen
- 1: Anstrich gering bewachsen, unter 10 %
- 2: Anstrich bewachsen, unter 30 %
- 3: Anstrich deutlich bewachsen, unter 60 %
- 4: Anstrich stark bewachsen, über 60 %

| Bezeichnung der Proben | Anstrichgewicht g/m² | Belastung | Bewertung Bewuchs mit Algen | |
|---|---|---|---|---|
| | | | Chlorella fusca | Praxisalgen |
| 1.) Farbe mit | 106 | a) | 0 | 0 |
| 0.1 % Mctt und | | b) | 0 | 0 |
| 0.1 % BCM | | c) | 0 | 0 |
| | | | | |
| 2.) Farbe mit | 139 | a) | 0 | 0 |
| 0.2 % Mctt und | | b) | 0 | 0 |
| 0.2 % BCM | | c) | 0 | 0 |
| | | | | |
| 3.) Farbe mit | 118 | a) | 0 | 0 |
| 0.1 % Mctt und | | b) | 0 | 0 |
| 0.2 % BCM | | c) | 0 | 0 |
| | | | | |
| 4.) Vergleichsbeispiel Farbe mit | 117 | a) | 0 | 0 |
| 0.5 % Zinkdimethyldithiocarbamat und | | b) | 2 | 3 |
| 0.1 % BCM | | c) | 4 | 4 |
| | | | | |
| 5.) Wuchskontrolle Farbe ohne Zusatz | 120 | a) | 4 | 4 |
| | | b) | 4 | 4 |
| | | c) | 4 | 4 |

- Mctt:: Methylthio-cyclopropylamino-tertiärbutylamino-1,3,5-triazin
- BCM:: Benzimidazolylmethylcarbamat

Belastung:
a) ohne Belastung
b) Prüflinge aufgelegt 48h auf frisch hergestellten Dachsteinzement bei 60°C, anschließend Wässerung 48h
c) Prüflinge aufgelegt 48h auf frisch hergestellten Dachsteinzementen bei 60°C, anschließend Wässerung 96h

Das Beispiel zeigt, daß die anspruchsgemäßen Mikrobiozide das Wachstum von Algen auf der Kunststoffbeschichtung auch nach der Belastung durch hohe pH-Werte, Temperaturen und wässerung vollständig verhindern, während eine Ausrüstung, die dem Stand der Technik entspricht, die praxisähnlichen Belastungen nicht übersteht und nicht ausreichend wirksam bleibt.

### Beispiel 3:

Sanierung eines moos-, flechten-, pilz- und algenbewachsenen Daches.

Durch diesen Versuch wird die Dauerwirksamkeit einer Betondachsteinkonservierung unter Praxisbedingungen ermittelt. Es handelt sich um ein einstöckiges Einfamilienhaus in ländlicher regenreicher Umgebung Norddeutschlands. Das Haus ist von einer etwa 30 x 30 m² großen Grünfläche umgeben, die von einzelnen Bäumen bzw. Büschen, hauptsächlich Wacholder, Birken, Fichten und Kiefern, bewachsen war, so daß optimale Wuchsbedingungen für Algen und Pilze gegeben waren.

Es wurde die am stärksten mit Algen, Moosen und Flechten befallene West-Nordwest-Seite des Daches berücksichtigt. Die gesamte Versuchsfläche betrug 12 x 17 Dachsteine, die in 3 Sektoren aufgeteilt wurde. Die sanierten Versuchssektoren hatten somit eine Größe von 4 x 17 Dachsteinen (6.8 m²).

Das Dach war stark mit Algen, Moosen und Flechten bewachsen. Außerdem war es mit mechanischem Schmutz behaftet. Die ehemals roten Betondachsteine waren dadurch nahezu schwarz, sonst durch flächigen Algenbewuchs grün verfärbt.

Durch eine mechanisch-hydraulische Reinigung mit einem Hochdruckstrahlgerät wurde auf allen drei Sektoren der aufliegende Schmutz und Bewuchs entfernt.

Sektor 1 wurde folgendermaßen mit einer anspruchsgemäßen Beschichtung versehen.

20 g Mctt wurde in 40 g Butyldiglykol gelöst und zusammen mit 10 g gemahlenem BCM in 600 g Polyacrylatdispersion (Mowilith® DM 771 - Fa. Hoechst AG, Frankfurt) eingerührt. Diese Mischung wurde in 1340 g Wasser eingerührt. 947 g der so erhaltenen Dispersion wurde direkt auf die zu sanierende Fläche mit einer Gartenspritze aufgebracht. Am First beginnend wurde die Konservierungslösung auf die Dachfläche aufgesprüht, so daß eine möglichst flächige Benetzung auch der Dachsteinkanten eintrat. In einem zweiten Arbeitsgang wurden die Dachsteinunterkanten bevorzugt besprüht.

Nach ca. 25 min war das Dach oberflächig abgetrocknet. Es wurde so auf das Dach 1.39 g Mctt pro m² aufgebracht.

Als Wuchskontrolle wurde der gleichgroße zweite Sektor nach gleicher mechanischer Reinigung mit einer Lösung von 5 g Natriumdichlorisocyanurat, 5 g Dodigen® 2815

(Fa. Hoechst AG, Frankfurt) und 12 g Natriumbenzoat in 1200 g Wasser besprüht und mit einer nicht mikrobizid ausgerüsteten Kunststoffdispersion wie zuvor beschrieben beschichtet.

Als Vergleich, der den gegenwärtigen Stand der Technik repräsentiert, wurde der dritte Versuchssektor nach der mechanischen Reinigung mit einer Kunststoffdispersion, die Zinkdimethyldithiocarbamat enthielt beschichtet, wobei 1.3 g Zinkdimethyldithiocarbamat pro m² aufgebracht wurden.

Nach 2 Jahren wurden die Versuchssektoren beurteilt und jeweils ein Dachstein mikroskopisch untersucht.

Auf dem mit dem anspruchsgemäßen Mittel konservierten Sektor 1 ließen sich auch nach zwei Jahren keine Algen, Pilze oder Flechten nachweisen, während der Sektor 2 wieder vollständig mit Algen und Flechten bewachsen und schwarz-grün verfärbt war. Der Sektor 3 wies besonders an den Unterkanten deutliche Ansätze von Algen- und Pilzbewuchs auf.

### Beispiel 4

Vergleich der Wirksamkeit in Fassadenfarben und in Dachsteinbeschichtungen.

Die zu prüfenden Wirkstofformulierungen werden in abgestuften Konzentrationen in eine handelsübliche Dispersionsfarbe eingemischt.

Für die Prüfung der Anwendbarkeit des anspruchsgemäßen Mittels in Dachsteinbeschichtungen werden wie in Beispiel 2 beschrieben Prüfkörper hergestellt und wie in Beispiel 2, Serie c vorbelastet.

Als Vergleich dazu werden die Bedingungen, denen eine Fassadenfarbe ausgesetzt ist, folgendermaßen simuliert:

Die in Beispiel 2 beschriebenen frisch angestrichenen Papierfilter werden 16 Stunden auf Filterpapier an der Luft getrocknet.

Anschließend werden die Prüfkörper 48 Stunden mit Leitungswasser gewässert, wobei pro m² 63 l Wasser eingesetzt werden, um eine Auswaschbelastung durch Beregnung zu simulieren. Das Auslaugwasser wird jeweils nach 24 Stunden gewechselt.

Die Prüfung der Bewuchsfestigkeit gegen Algen wird wie in Beispiel 2 beschrieben durchgeführt. Auch die Bewertung erfolgt wie dort beschrieben.

| Bezeichnung der Proben | Anstrichgewicht g/m² | Belastung | Bewertung Bewuchs mit Algen | |
|---|---|---|---|---|
| | | | Chlorella fusca | Praxisalgen |
| 1.) Farbe mit | 189 | a) | 0 | 0 |
| 0.15 % Mctt und | | b) | 0 | 0 |
| 0.05 % BCM | | c) | 0 | 0 |
| | | | | |
| 2.) Farbe mit | 173 | a) | 0 | 0 |
| 0.05 % Mctt und | | b) | 0 | 0 |
| 0.05 % BCM | | c) | 0 | 0 |
| | | | | |
| 3.) Vergleichsbeispiel Farbe mit | 196 | a) | 0 | 0 |
| 0.2 % 2-Octylisothiazolin-3-on | | b) | 4 | 4 |
| 0.08 % BCM | | c) | 0 | 0 |
| | | | | |
| 4.) Wuchskontrolle Farbe ohne Zusatz | 206 | a) | 4 | 4 |
| | | b) | 4 | 4 |
| | | c) | 4 | 4 |
| | | | | |

- Mctt:: Methylthio-cyclopropylamino-tertiärbutylamino-1,3,5-triazin
- BCM:: Benzimidazolylmethylcarbamat

Belastung:
a) ohne Belastung
b) Prüflinge aufgelegt 48h auf frisch hergestelltem Dachsteinzement bei 60°C, anschließend Wässerung 96h (entspricht Belastung für Dachstein)
c) Wässerung 48h (Vergleichsbelastung für einen Fassadenanstrich)

Das Beispiel zeigt, daß die anspruchsgemäßen Mittel auch noch bei den höheren Belastungen beim Einsatz in Dachsteinbeschichtungen voll wirksam sind, während die Mittel des Standes der Technik zwar in Fassadenfarben noch wirksam sind, aber nicht mehr in Dachsteinbeschichtungen.

## Patentansprüche

1. Verwendung von Methylthio-cyclopropylamino-tertiärbutylamino-1,3,5-triazin (Mctt) als mikrobiozides Mittel bei der Herstellung von Betondachsteinen.

2. Verwendung gemäß Anspruch 1, dadurch gekennzeichnet, daß das Mctt in einer Mischung mit einem oder mehreren Fungiziden eingesetzt wird.

3. Verwendung gemäß Anspruch 2, dadurch gekennzeichnet, daß das Gewichtsverhältnis Mctt: Fungizid 1 : 0,1 bis 1 : 20 beträgt.

4. Verwendung gemäß Anspruch 2 und/oder 3, dadurch gekennzeichnet, daß das Gewichtsverhältnis Mctt: Fungizid 1 : 0,5 bis 1 : 5 beträgt.

5. Verwendung gemäß einem oder mehreren der Ansprüche 2 bis 4, dadurch gekennzeichnet, daß als Fungizide Benzimidazolderivate, Triazolderivate oder Morpholinderivate eingesetzt werden.

6. Verwendung gemäß einem oder mehreren der Ansprüche 2 bis 5, dadurch gekennzeichnet, daß als Fungizid Benzimidazolylmethylcarbamat eingesetzt wird.

7. Verwendung gemäß einem oder mehreren der Ansprüche 1 bis 6, dadurch gekennzeichnet, daß das Mctt bzw. eine Mischung aus Mctt und einem oder mehreren Fungiziden einer filmbildenden Kunststoffdispersion zugesetzt verwendet wird.

8. Verwendung gemäß Anspruch 7, dadurch gekennzeichnet, daß als Kunststoffdispersion eine Dispersion auf Polyacrylat-Basis oder auf Styrolacrylat-Basis eingesetzt wird.

## Claims

1. Use of methylthio-cyclopropylamino-tert.-butylamino-1,3,5,-triazine (Mctt) as a microbiocidal agent for the preparation of concrete roof tiles.

2. Use according to Claim 1, characterized in that the Mctt is employed in a mixture with one or more fungicides.

3. Use according to Claim 2, characterized in that the weight ratio of Mctt : fungicide is 1 : 0.1 to 1 : 20.

4. Use according to Claim 2 and/or 3, characterized in that the weight ratio of Mctt : fungicide is 1 : 0.5 to 1 : 5.

5. Use according to one or more of Claims 2 to 4, characterized in that benzimidazole derivatives, triazole derivatives or morpholine derivatives are employed as the fungicide.

6. Use according to one or more of Claims 2 to 5, characterized in that benzimidazolyl methylcarbamate is employed as the fungicide.

7. Use according to one or more of Claims 1 to 6, characterized in that the Mctt or a mixture of Mctt and one or more fungicides is added to a film-forming polymer dispersion.

8. Use according to Claim 7, characterized in that a dispersion based on polyacrylate or based on styrene acrylate is employed as the polymer dispersion.

## Revendications

1. Utilisation de la méthylthio-cyclopropylamino-tertiairbutylamino-1,3,5-triazine (Mctt) en tant qu'agent microbiocide pour la préparation de tuiles de toiture en béton.

2. Utilisation selon la revendication 1, caractérisée en ce qu'on utilise la Mctt dans un mélange avec un ou plusieurs fongicides.

3. Utilisation selon la revendication 2, caractérisée en ce que le rapport pondéral de Mctt:fongicide est de 1:0,1 à 1:20.

4. Utilisation selon la revendication 1 et/ou 3, caractérisée en ce que le rapport pondéral de la Mctt: fongicide est de 1:0,5 à 1:5.

5. Utilisation selon une ou plusieurs des revendications 2 à 4, caractérisée en ce qu'on utilise en tant que fongicides des dérivés de benzimidazoles, des dérivés de triazoles et/ou des dérivés de morpholine.

6. Utilisation selon une ou plusieurs des revendications 2 à 5, caractérisée en ce qu'on utilise en tant que fongicide le benzimidazolylméthylcarbamate.

7. Utilisation selon une ou plusieurs des revendications 1 à 6, caractérisée en ce qu'on utilise la Mctt, respectivement un mélange de la Mctt et d'un ou plusieurs fongicides en les ajoutant à une dispersion de matière plastique filmogène.

8. Utilisation selon la revendication 7, caractérisée en ce qu'on utilise en tant que dispersion de matière plastique une dispersion à base de polyacrylate ou à base de styrène-acrylate.
